# EUROPEAN PATENT APPLICATION

(11) **EP 1 355 504 A1**
(43) Date of publication of application: **22.10.2003**
(21) Application number: 03008725.8
(22) Date of filing: 16.04.2003
(51) Int. Cl.: H04Q 7/34

(54) **Ciphering tester for mobile terminal with W-CDMA scheme**

(30) Priority: 19.04.2002 JP 2002117434
(71) Applicant: ANRITSU CORPORATION, Minato-ku Tokyo (JP)
(72) Inventor: Shiina, Hiroki, Atsugi-shi, Kanagawa-ken (JP)
(74) Representative: Balsters, Robert

(57) **Abstract**

A ciphering tester for a mobile terminal with a W-CDMA scheme carries out a test relating to ciphering of a mobile terminal (1) by carrying out transmitting and receiving of data and control information with a test control section (30) which presents control information including parameters for ciphering processing corresponding to a data transferring mode with the mobile terminal (1). A layer 1 processing section (22) carries out transmitting and receiving of radio signals with the mobile terminal (1). A layer 2 processing section (23) enables transmitting and receiving of data by forming a link with the mobile terminal (1), and, in order to carry out the ciphering processing on the data, has a media access control section (24) which carries out transmitting and receiving of data with the layer 1 processing section, and radio link controlling means (25) which carries out transmitting and receiving of data with the media access control section (24) and the test control section (30). A mask data calculating section calculates mask data for use in the ciphering processing carried out in the layer 2 processing section (23) on the basis of the parameters for the ciphering processing. The media access control section (24) is configured to receive control information including the parameters for the ciphering processing presented by the test control section (30) via the radio link control section (25), and to notify the mask data calculating section of the parameters for the ciphering processing. The mask data calculating section is provided to be independent from the media access control section (24) and the radio link control section (25) of the layer 2 processing section (23), and is configured to have at least one mask data computing unit (26) which calculates mask data for use in the ciphering processing carried out in the layer 2 processing section (23) on the basis of the parameters for the ciphering processing reported from the media access control section (24). The media access control section (24) is configured to carry out ciphering processing on the data in accordance with a data transferring mode with the mobile terminal (1) by using the mask data calculated by the mask data computing unit (26).

## Description

The present invention relates to a tester for carrying out ciphering testing of a mobile terminal with a W-CDMA (Wideband-Code Division Multiple Access) scheme, and in particular, to a ciphering tester for a mobile terminal with a W-CDMA scheme which employs a technique for smoothly realizing testing relating to ciphering with a small number of hardware configurations.

As is commonly known, a radio system in accordance with W-CDMA is a system in which a transmitting information data series is diffused into signals of a wide band by diffusion codes having a high speed rate as compared with the symbol rate of the transmitting information data series, and are transmitted.

Recently, use of such a W-CDMA scheme has come to be realized in Japan and Europe as new radio access system of mobile terminals such as mobile cellular phones or the like, i.e., as the third generation cellular system.

In such a W-CDMA scheme, in order to maintain ciphering of data to be transmitted, a technique is used in which data encoded by predetermined data is transmitted and the received data is decoded by the aforementioned predetermined data.

Encoding and decoding for maintaining ciphering of data to be transmitted are realized by carrying out mask processing (taking the exclusive OR) on the transmitting data or the receiving data by mask data (keystream blocks) calculated on the basis of various parameters required for ciphering processing.

Further, in the W-CDMA scheme, with respect to the ciphering processing, it has been stipulated by the 3^{rd} Generation Partnership Project (3GPP TS 25.321 and 25.322) that the ciphering processing shall be used properly as follows in accordance with the data transmitting mode (an authentication type mode (AM), an unauthentication type mode (UM), a transmission type mode (TM)) which is the protocol and which is used in the radio link control section (RLC) of a layer 2 processing section.
(a) Ciphering processing (hereinafter called first ciphering processing) is carried out in a media access control section (MAC) of the layer 2 processing section on data of a logical channel using a transmission type mode (TM) in the RLC (3GPP TS 25.322).
(b) Ciphering processing (hereinafter called a second ciphering processing) is carried out in the RLC of the layer 2 processing section on data of a logical channel using an authentication type mode (AM) or an unauthentication type mode (UM) in the RLC (3GPP TS 25.321).

Note that, here, the authentication type mode (AM) is a mode in which, at the time of carrying out communication of packet data or the like, when data having errors is received, retransmission of the data is required.

The unauthentication type mode (UM) is a mode in which, when data having errors is received, the data is cancelled.

Further, the transmission type mode (TM) is a mode in which, at the time of carrying out communication of voices or the like, the data is transmitted without carrying out determination of errors or the like.

Accordingly, as a tester carrying out testing of such a mobile terminal with a W-CDMA scheme, it is necessary to carry out ciphering testing in accordance with the first and second ciphering processings according to the aforementioned stipulations.

In order to carry out testing relating to ciphering of a mobile terminal in accordance with the first and second ciphering processings according to the aforementioned stipulations, it is necessary for the media access control section (MAC) and the radio link control section (RLC) which configure the layer 2 processing section of the tester to respectively execute the first and second ciphering processing functions.

However, in a tester of a conventional mobile terminal, usually, the radio link control section (RLC) and the media access control section (MAC) are configured to be a function block in a single CPU.

Therefore, the processing of calculating the mask data required for the above-described first and second ciphering processings in the normal processing steps of the respective control sections of the RLC and the MAC which are configured as a function block in a single CPU becomes a large burden, and the problem that the processing efficiency of the CPU deteriorates has arisen.

As a result, in the tester of the conventional mobile terminal, the problem that it is difficult to smoothly carry out testing relating to ciphering has arisen.

An object of the present invention is to provide a ciphering tester for a mobile terminal with a W-CDMA scheme, which uses a technique for smoothly carrying out testing relating to the ciphering of a mobile terminal with a W-CDMA scheme.

In order to achieve the above object, according to a first aspect of the present invention, there is provided a ciphering tester for a mobile terminal with a W-CDMA scheme carrying out a test relating to ciphering of a mobile terminal (1) with a W-CDMA scheme by carrying out transmitting and receiving of data and control information with a test control section (30) presenting control information including parameters for ciphering processing corresponding to a data transferring mode with the mobile terminal (1) with a W-CDMA scheme, comprising:
a layer 1 processing section (22) to carry out transmitting and receiving of radio signals with the mobile terminal (1) with a W-CDMA scheme;
a layer 2 processing section (23) which enables transmitting/receiving of data by forming a link with the mobile terminal (1) with a W-CDMA scheme, and which, in order to carry out the ciphering processing on the data, has a media access control section (24) which carries out transmitting and receiving of data with the layer 1 processing section, and radio link controlling means (25) which carries out transmitting and receiving of data with the media access control section (24) and the test control section (30); and
a mask data calculating section calculating mask data for use in the ciphering processing carried out at the layer 2 processing section (23) on the basis of parameters for ciphering processing presented by the test control section (30),
characterized in that
the media access control section (24) is configured to receive control information including parameters for the ciphering processing presented by the test control section (30) via the radio link control section (25), and to notify the mask data calculating section of the parameters for the ciphering processing,
the mask data calculating section is provided to be independent from the media access control section (24) and the radio link control section (25) of the layer 2 processing section (23), and is configured to have at least one mask data computing unit (26) which calculates mask data for use in the ciphering processing carried out at the layer 2 processing section (23) on the basis of the parameters for the ciphering processing reported from the media access control section (24), and
the media access control section (24) is configured to carry out ciphering processing on the data in accordance with a data transferring mode with the mobile terminal (1) with a W-CDMA scheme by using the mask data calculated by the mask data computing unit (26).

In order to achieve the above object, according to a second aspect of the present invention, there is provided a ciphering tester for a mobile terminal with a W-CDMA scheme according to the first aspect, characterized in that the mask data computing unit (26) calculates mask data for use in a predetermined ciphering processing applied in a case in which the data transferring mode with the mobile terminal (1) with a W-CDMA scheme is a transmission type mode on the basis of the parameters for the ciphering processing reported from the media access control section (24), and has one or more mask data computing sections which calculate mask data for use in a predetermined ciphering processing applied in a case in which the data transferring mode with the mobile terminal (1) with a W-CDMA scheme is an authentication type mode or an unauthentication type mode.

In order to achieve the above object, according to a third aspect of the present invention, there is provided a ciphering tester for a mobile terminal a with W-CDMA scheme according to the first or second aspect, characterized in that the mask data computing unit (26) is provided to be independent from the media access control section (24) and the radio link control section (25) in the layer 2 processing section.

In order to achieve the above object, according to a fourth aspect of the present invention, there is provided a ciphering tester for a mobile terminal with a W-CDMA scheme according to any one of the first to third aspects, characterized in that the mask data computing unit (26) is configured to calculate mask data for use in the ciphering processing on the basis of the parameters for the ciphering processing reported from the media access control section (24), and to output the mask data to the media access control section (24).

In order to achieve the above object, according to a fifth aspect of the present invention, there is provided a ciphering tester for a mobile terminal with a W-CDMA scheme according to any one of the first to fourth aspects, characterized in that the radio link control section (25) is configured to notify the media access control section (24) of parameters for new ciphering processing, in which its own control information is added to the parameters for the ciphering processing presented by the test control section (30), when the data transferring mode with the mobile terminal (1) with a W-CDMA scheme is an authentication type mode or an unauthentication type mode.

In order to achieve the above object, according to a sixth aspect of the present invention, there is provided a ciphering tester for a mobile terminal with a W-CDMA scheme according to any one of the first to fifth aspects, characterized in that the media access control section (24) is configured to, when the data transferring mode with the mobile terminal (1) with a W-CDMA scheme is an transmission type mode, notify the mask data computing unit (26) of the parameters for the ciphering processing presented by the test control section (30) via the radio link control section (25), and carry out the ciphering processing on the data by using the mask data calculated by the mask data computing unit (26).

In order to achieve the above object, according to a seventh aspect of the present invention, there is provided a ciphering tester for a mobile terminal with a W-CDMA scheme according to the fifth aspect,
characterized in that the media access control section (24) is configured to, when the data transferring mode with the mobile terminal (1) with a W-CDMA scheme is an authentication type mode or an unauthentication type mode, notify the mask data computing unit (26) of the parameters for the new ciphering processing received from the radio link control section (25), and carry out the ciphering processing on the data by using the mask data calculated by the mask data computing unit (26).

In order to achieve the above object, according to an eighth aspect of the present invention, there is provided a ciphering tester for a mobile terminal with a W-CDMA scheme according to any one of the first to seventh aspects, characterized in that the media access control section (24) and the radio link control section (25) are integrally configured from a microprocessor including a central processing unit (CPU).

In order to achieve the above object, according to a ninth aspect of the present invention, there is provided a ciphering tester for a mobile terminal with a W-CDMA scheme according to the eighth aspect,
characterized in that the mask data computing unit (26) is configured form a digital signal processor which is independent from the CPU and which parallel-operates with the CPU.

In order to achieve the above object, according to a tenth aspect of the present invention, there is provided a ciphering tester for a mobile terminal with a W-CDMA scheme according to any one of the first to ninth aspects, characterized in that, when the test control section (30) is configured from a computer including an external personal computer (PC), the test control section (30) is configured such that a program controlling execution of a test relating to ciphering of the mobile terminal (1) with a W-CDMA scheme is installed in the PC via a recording medium or a communication medium.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a configuration of an embodiment of a ciphering tester for a mobile terminal with a W-CDMA scheme according to the present invention;
FIGS. 2A and 2B are flowcharts for explanation of operations in a transmission type mode as the operation of a main portion of FIG. 1;
FIGS. 3A and 3B are flowcharts for explanation of operations in an unauthentication type mode as the operation of the main portion of FIG. 1;
FIGS. 4A and 4B are flowcharts for explanation of operations in an authentication type mode as the operation of the main portion of FIG. 1;
FIG. 5 is a block diagram for explanation of an operating example in the transmission type mode as the operation of the main portion of FIG. 1;
FIG. 6 is a block diagram for explanation of an operating example in the authentication type mode or the unauthentication type mode as the operation of the main portion of FIG. 1;
FIG. 7 is a timing chart for explanation of an example of a down sequence in authentication type mode as the operation of the main portion of FIG. 1;
FIG. 8 is a timing chart for explanation of an example of an up sequence in the authentication type mode as the operation of the main portion of FIG. 1;
FIG. 9 is a timing chart for explanation of an example of a down sequence in transmission type mode as the operation of the main portion of FIG. 1;
FIG. 10 is a timing chart for explanation of an example of general command transmitting/receiving timings between CPUs (a MAC 24, an RLC 25) and DSP (a mask data computing unit 26) as the operation of the main portion of FIG. 1;
FIG. 11 is a timing chart for explanation of an example of command transmitting/receiving timings at the time of starting a test between the CPUs (MAC 24, RLC 25) and the DSP (mask data computing unit 26) as the operation of the main portion of FIG. 1;
FIG. 12 is a timing chart for explanation of an example of command transmitting/receiving timings at the time of starting the ciphering processing between the CPUs (MAC 24, RLC 25) and the DSP (mask data computing unit 26) as the operation of the main portion of FIG. 1;
FIG. 13 is a timing chart for explanation of an example of command transmitting/receiving timings at the time of resetting the ciphering processing between the CPUs (MAC 24, RLC 25) and the DSP (mask data computing unit 26) as the operation of the main portion of FIG. 1; and
FIG. 14 is a timing chart for explanation of an example of command transmitting/receiving timings at the time of ending the ciphering processing between the CPUs (MAC 24, RLC 25) and the DSP (mask data computing unit 26) as the operation of the main portion of FIG. 1.

Reference will now be made in detail to the presently preferred embodiments of the invention as illustrated in the accompanying drawings, in which like reference numerals designate like or corresponding parts.

Hereinafter, an embodiment of the present invention will be described with reference to the drawings.

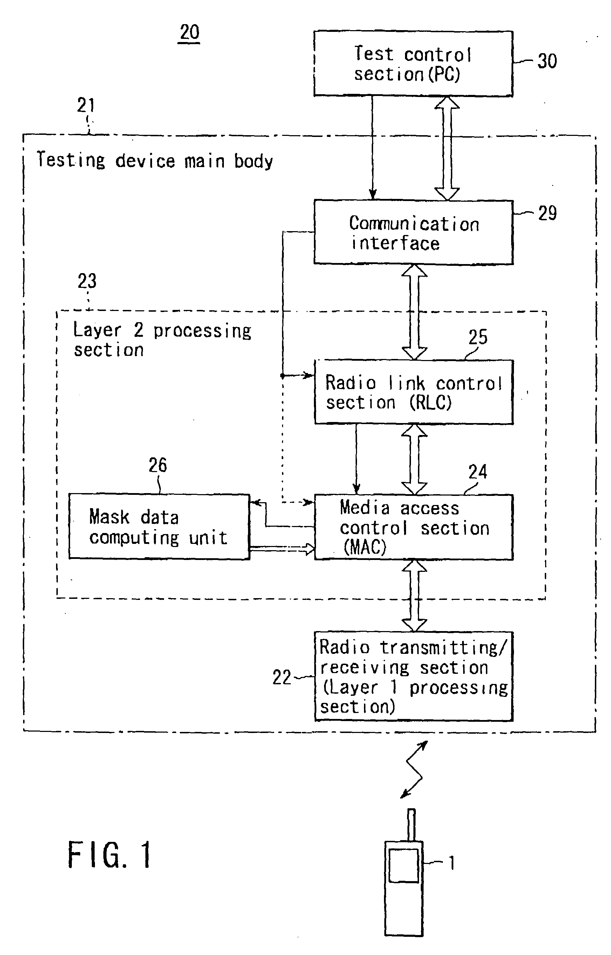

FIG. 1 is a block diagram showing a configuration of a mobile terminal tester 20 to which an embodiment of a ciphering tester for a mobile terminal with a W-CDMA scheme according to the present invention is applied.

As shown in FIG. 1, the mobile terminal tester 20 is configured from a tester main body 21 and a test control section 30 formed from an external personal computer or the like.

Here, a program controlling execution of a test relating to the ciphering of a mobile terminal (for example, a mobile cellular phone) 1 which is a testing object is installed via a recording medium or a communication medium at the test control section 30 formed from an external personal computer or the like. The test control section 30 presents control information including parameters for first and second ciphering processings as will be described later.

Further, the tester main body 21 is configured from a radio transmitting/receiving section 22 which configures a layer 1 processing section and which carries out transmitting/receiving of radio waves and modulating and demodulating processings of data with the mobile terminal 1 with a W-CDMA scheme which is the testing object, a layer 2 processing section 23, and a communication interface 29 for carrying out transmitting and receiving of data and control information with the external test control section 30.

The radio transmitting/receiving section (layer 1 processing section) 22 has a transmitting function and a receiving function as will be described hereinafter.

First, in order to execute the transmitting function, the radio transmitting/receiving section (layer 1 processing section) 22 encodes (called channel encoding) by using a code for identifying the channel in which data from the layer 2 processing section 23 is set in advance.

Next, the radio transmitting/receiving section (layer 1 processing section) 22 carries out, by a QPSK (Quadrature Phase Shift Keying) method, data modulation on the data which was channel-encoded.

Sequentially, the radio transmitting/receiving section (layer 1 processing section) 22 carries out, by a diffusing code, frequency diffusion processing on the QPSK modulated data.

Further, the radio transmitting/receiving section (layer 1 processing section) 22 frequency-converts the frequency diffusion processed data into a high frequency band, and transmits it toward the mobile terminal 1.

Also, the radio transmitting/receiving section (layer 1 processing section) 22 frequency-converts the received wave from the mobile terminal 1 into a low frequency band in order to execute the receiving function.

Next, the radio transmitting/receiving section (layer 1 processing section) 22 carries out frequency inversion diffusion processing, by the same code as the diffusing code, on the received wave which was frequency-converted to a low frequency band.

The radio transmitting/receiving section (layer 1 processing section) 22 then demodulates the frequency inversion diffusion processed output.

Further, the radio transmitting/receiving section (layer 1 processing section) 22 decodes the demodulated signal by the code for identifying the channel which is set in advance, and outputs the decoded signal to the layer 2 processing section 23.

The layer 2 processing section 23 enables transmitting/receiving of data by forming a link with the mobile terminal 1 which is the testing object, and has the function of carrying out the first and second ciphering processings, which will described later, on data.

The layer 2 processing section 23 has a media access control section (MAC) 24 carrying out transmitting and receiving of data with the radio transmitting/receiving section 22, a radio link control section (RLC) 25 carrying out transmitting and receiving of data between the media access control section 24 and the external test control section 30, and a mask data computing unit 26.

Here, the media access control section 24 is configured to execute processings in real time, such as matching a logical channel defined with the radio link control section 25 and a transport channel defined with the radio transmitting/receiving section 22 which is the layer 1 processing section, identifying a terminal by the MAC header of the data, multiplexing/separating the data with respect to the transport channel, and the like.

Further, regardless of which case the data transferring mode is, the media access control section 24 is configured to notify the mask data computing unit 26 of parameters required for the first and second ciphering processings presented by the external test control section 30 via the radio link control section 25, and to carry out the first and second ciphering processings on the aforementioned data by using the mask data for the first and second ciphering processings calculated by the mask data computing unit 26.

Namely, when the data transferring mode is the transmission type mode (TM) and the ciphering processing is required, the media access control section 24 notifies the mask data computing unit 26 of parameters required for the first ciphering processing presented by the external test control section 30, and carries out the first ciphering processing on the aforementioned data by the mask data required for the first ciphering processing calculated by the mask data computing unit 26.

Also, when the data transferring mode is the authentication type mode (AM) or the unauthentication type mode (UM) and the ciphering processing is requested, the media access control section 24 is configured to notify the mask data computing unit 26 of the parameters required for the second ciphering processing received from the radio link control section 25, and to carry out the second ciphering processing on the aforementioned data by the mask data required for the second ciphering processing calculated by the mask data computing unit 26.

Further, the radio link control section 25 is configured to enable transfer of data in an arbitrary data transferring mode among the transmission type mode, the unauthentication type mode, and the authentication type mode, with the mobile terminal 1 by forming a link by radio with the mobile terminal 1 which is the testing object, and to enable transmitting and receiving of data between the upper layer (in this case, the external test control section 30) and the mobile terminal 1.

Note that the type of the data transferring mode can be specified from the external test control section 30 side.

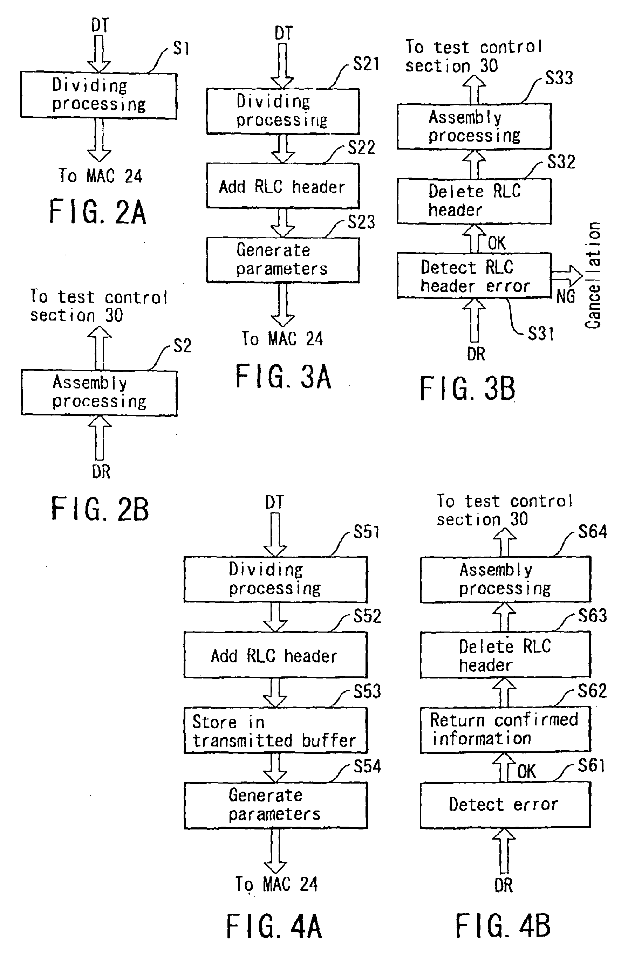

FIGS. 2A and 2B are flowcharts for explanation of operations in the transmission type mode as the operation of a main portion of FIG. 1.

First, when the transmission type mode is specified as the data transferring mode, as shown in FIG. 2A, the radio link control section 25 carries out dividing processing (step S1) as needed on the transmitting data received from the external test control section 30 side, and thereafter, transmits it to the media access control section 24.

Further, as shown in FIG. 2B, conversely, the radio link control section 25 carries out assembly processing (step S2) as needed on the receiving data received from the media access control section 24, and thereafter, outputs it to the external test control section 30.

FIGS. 3A and 3B are flowcharts for explanation of operations in the unauthentication type mode as the operation of the main portion of FIG. 1.

First, when the unauthentication type mode is specified as the data transferring mode, as shown in FIG. 3A, the radio link control section 25 carries out the processing of dividing (step S21) the transmitting data DT into required units, and thereafter, adds an RLC header including a sequence number to it (step S22), and sends it to the media access control section 24.

Note that, at this time, if ciphering processing is required, the radio link control section 25 generates new parameters for the second ciphering processing, which are formed from parameters for the second ciphering processing presented by the external test control section 30 and from its own control information (step S23), and transmits the new parameters for the second ciphering processing to the media access control section 24.

In addition, as shown in FIG. 3B, the radio link control section 25 detects errors in the transmitting data received from the media access control section 24 (step S31). When there are no errors, after the RLC header is deleted (step S32), the radio link control section 25 outputs the data on which data assembly processing was carried out (step S33) to the external test control section 30.

Note that, at step S31, when there are errors, the radio link control section 25 cancels the data.

FIGS. 4A and 4B are flowcharts for explanation of operations in the authentication type mode as the operation of the main portion of FIG. 1.

First, when the authentication type mode is specified as the data transferring mode, as shown in FIG. 4A, the radio link control section 25 carries out the processing of dividing (step S51) the transmitting data DT into the required units in the same way as described above, and thereafter, adds an RLC header including a sequence number to it (step S52) and sends it to the media access control section 24, and stores it in a transmitted data buffer (not shown) (step S53).

Note that, at this time, if ciphering processing is requested, the radio link control section 25 generates new second parameters, which are formed from the second ciphering processing parameters presented by the external test control section 30 and from its own control information (step S54), and transmits the new second parameters to the media access control section 24.

Further, as shown in FIG. 4B, the radio link control section 25 detects errors in the transmitting data DR received from the media access control section 24 (step S61). When there are no errors, after the radio link control section 25 returns confirmed information showing confirmation of no errors as control information to the transmitting side (step S62) and deletes the RLC header (step S63), the radio link control section 25 carries out assembly processing (step S64) on the data and outputs the data to the external test control section 30.

Note that, in step S61, when there are errors, the radio link control section 25 transmits control information for requesting retransmission to the mobile terminal 1, or when there are serious problems, the radio link control section 25 initializes the parameters by transmitting the control information requiring resetting, and takes the procedure of making the routine start over again from the beginning.

Also, when the radio link control section 25 receives the control information including a retransmission requirement from the media access control section 24, the radio link control section 25 extracts data of a sequence number specified from the transmitted buffer, and carries out retransmission.

Note that the media access control section 24 and the radio link control section 25 which were described above are configured from a microprocessor (not shown) including a microcomputer which is formed from a CPU, a ROM, and a RAM.

In this case, the processing function of the media access control section 24 which requires real time processing is executed by interruption handling with respect to the CPU of the microprocessor.

The processing function of the radio link control section 25 which does not require real time processing is executed by task processing of the microprocessor.

Note that the layer 2 processing section 23 is capable of transmitting and receiving data and control information with the test control section 30 via the communication interface 29.

The external test control section 30 stores in advance a program formed from procedures of various tests including a ciphering test for the mobile terminal 1, data and control information required for the items thereof, and the like, and can carry out the various tests including the ciphering test of the mobile terminal 1 by executing the program.

Here, when the external test control section 30 is configured from a computer including a personal computer (PC), as described above, the program controlling execution of the test relating to the ciphering of the mobile terminal 1 may be installed into the aforementioned PC via a recording medium or a communication medium.

Further, when the test is the test relating to the ciphering of the mobile terminal 1 among the various tests for the mobile terminal 1, the external test control section 30 specifies the data transferring mode and the parameters required for calculating mask data to the tester main body 21.

As the parameters required for the mask data, there are "COUNT" expressing a ciphering sequence number, "CK" which is a certification phase, "BEARER" which is an identifier of a logical channel, "DIRECTION" showing the difference between up and down, "LENGTH" expressing the length of the mask data (a KEYSTREAM BLOCK), and "Activation Time, Increment, and the like" specifying timings of the start and the end of the ciphering processing (3GPP TS 33.102) as parameters provided by the 3^{rd} Generation Partnership Project which was described above.

On the other hand, the mask data computing unit 26 is made to be dedicated for calculating the mask data used for the aforementioned ciphering processing, and is configured from, for example, a digital signal processor (DSP) which can carry out high speed computing.

The mask data computing unit 26 configured from the digital signal processor (DSP, for example, TMS 320VC5420PGE manufactured by Texas Instruments Incorporated, or the like) is configured to carry out parallel processing in addition to the processings which the radio link control section 25 and the media access control section 24, which are configured from a microcomputer as described above, carry out.

The mask data computing unit 26 calculates mask data M on the basis of the parameters received from the media access control section 24, and outputs the mask data M to the media access control section 24.

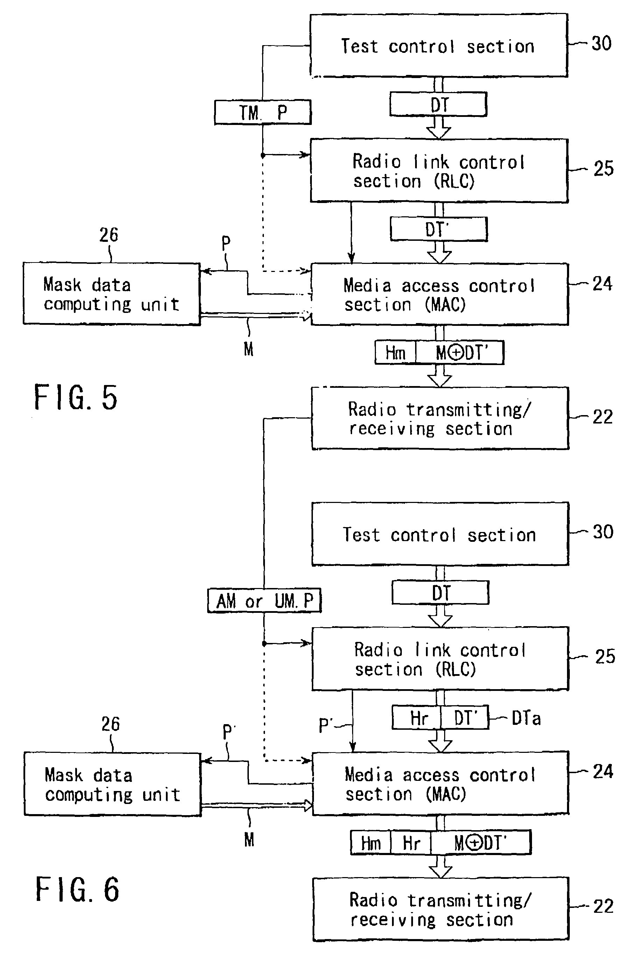

FIG. 5 is a block diagram for explanation of an operating example in the transmission type mode as the operation of the main portion of FIG. 1.

In the mobile terminal tester 20 configured as described above, for example, the ciphering processing is specified in the transmission type mode by the test control section 30. When the specific transmitting data DT is inputted, as shown in FIG. 5, data DT' which is substantially the same as the data DT is transmitted from the radio link control section 25 to the media access control section 24.

Note that, here, in order to simplify the explanation, explanation will be given focusing on only a single channel, without considering the dividing/assembly and the multiplexing/separation of the data.

The media access control section 24 notifies the mask data computing unit 26 of a parameter P received from the test control section 30, and receives the mask data M calculated by the mask data computing unit 26 with respect to the reported parameter P.

Then, the media access control section 24 carries out mask processing (EXOR) on the data DT' from the radio link control section 25 by the mask data M, and adds a MAC header Hm to data M⊕DT' obtained by the processing, and outputs it to the radio transmitting/receiving section 22.

FIG. 6 is a block diagram for explanation of an operating example in the authentication type mode or the unauthentication type mode as the operation of the main portion of FIG. 1.

First, the ciphering processing is specified in the authentication type mode AM or the unauthentication type mode UM by the test control section 30, and when the specific transmitting data DT is inputted, as shown in FIG. 6, data DTa, in which an RLC header Hr is added to the data DT', is transmitted from the radio link control section 25 to the media access control section 24.

Further, information of a new parameter P', which is obtained by adding the control information of the radio link control section 25 itself required for calculation of the mask data used for the ciphering processing to the parameter P reported from the test control section 30, is transmitted to the media access control section 24.

The media access control section 24 notifies the mask data computing unit 26 of the parameter P' received from the radio link control section 25, and receives the mask data M calculated by the mask data computing unit 26 with respect to the reported parameter P'.

The media access control section 24 then carries out mask processing on a payload portion DT of the data DTa from the radio link control section 25 by the mask data M, and adds a MAC header Hm to the data M⊕DT' obtained by the processing and to an RLC header Hr, and outputs it to the radio transmitting/receiving section 22.

Note that, the operating example described above was an example of a case of transmitting encoded data from the tester side. However, even when the encoded data is transmitted from the mobile terminal 1 side, the same ciphering processing (decoding processing in this case) is carried out.

Accordingly, if the mobile terminal 1 can accurately receive the contents of the above-described specific data DT, it can be determined that the decoding function of the ciphering processing of the mobile terminal 1 is normal.

Conversely, if results in which specific data is encoded and transmitted from the mobile terminal 1, and the encoded data is received and decoded at the media access control section 24, and the contents thereof are outputted on a monitor (not shown) of the test control section 30, coincide with the contents of the specific data, it can be determined that the encoding function of the ciphering processing of the mobile terminal 1 is normal.

Next, a concrete example of operations of a test relating to the ciphering of the mobile terminal 1 by the mobile terminal tester 20 of the embodiment will be described.

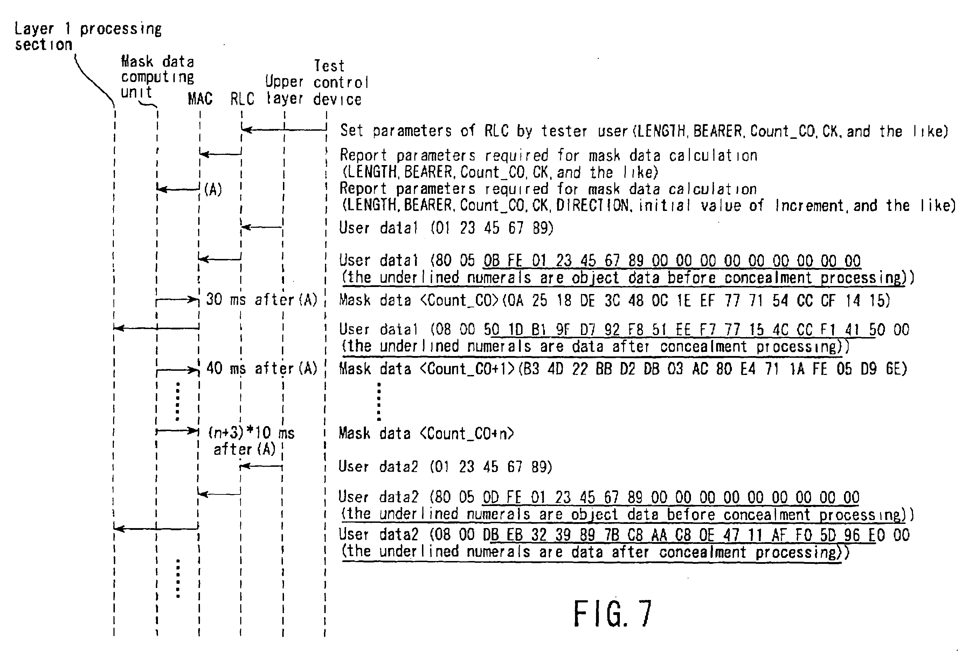

FIG. 7 is a timing chart for explanation of an example of a down link (communication in a direction from the tester to the mobile terminal) sequence in the authentication type mode (AM) as the operation of the main portion of FIG. 1.

Namely, as shown in FIG. 7, first, the user sets parameters (LENGTH, BEARER, COUNT_C0, CK, and the like) required for computing mask data used for the ciphering processing with respect to the radio link control section (RLC) 25, from the external test control section 30 which is the upper layer.

Next, the RLC 25 notifies the media access control section (MAC) 24 of the parameters (LENGTH, BEARER, COUNT_C0, CK, and the like) required for computing mask data used for the ciphering processing.

Sequentially, the MAC 24 notifies the mask data computing unit 26 of the parameters (LENGTH, BEARER, Count_C0, CK, DIRECTION, the initial value of the Increment, and the like) required for computing mask data used for the ciphering processing (this timing is A) .

Here, Count_C0 expresses the initial value of COUNT_C.

In this case, DIRECTION is down and is already known.

Further, the Increment shows how many KEYSTREAM BLOCKS are generated in the BEARER.

For example, when Initial COUNT_C = a and Increment = b, the mask data computing unit (DSP) 26 generates b KEYSTREAM BLOCKS by using COUNT_C = a, a+1, ..., a+b-1 (in this case, Increment = 1).

Next, user data 1 (01, 23, 45, 67, 89) are notified to the RLC 25 from the external test control section 30 which is the upper layer.

The notification may be occurred from an audio codic or the like, as the upper layer.

The RLC 25 then notifies the MAC 24 of user data 1 (80, 05, 0B, FE, 01, 23, 45, 67, 89, 00, 00, 00, 00, 00, 00, 00, 00, 00, wherein the underlined portion is the object data before ciphering processing).

Then, the mask data computing unit 26 notifies the MAC 24 of mask data <Count_C0> (OA, 25, 18, DE, 3C, 48, 0C, 1E, EF, 77, 71, 54, CC, CF, 14, 15) 30 ms after the above-described timing A.

Thereafter, the MAC 24 notifies the radio transmitting/receiving section (layer 1 processing section) 22 of user data 1 (08, 00, 50, 1D, B1, 9F, D7, 92, F8, 51, EE, F7, 77, 15, 4C, CC, F1, 41, 50, 00, wherein the underlined portion is the object data after ciphering processing).

Next, the mask data computing unit 26 notifies the MAC 24 of mask data <Count_C0+1> (B3, 4D, 22, BB, D2, DB, 03, AC, 80, E4, 71, 1A, FE, 05, D9, 6E) after 40 ms from the above-described timing A.

Hereinafter, in the same way, every time when Count_C0 is incremented, predetermined mask data are notified to the MAC 24 from the mask data computing unit 26.

Further, after (n+3)*10 ms from the above-described timing A, mask data <Count_C0+n> is notified to the MAC 24 from the mask data computing unit 26.

Next, user data 2 (01, 23, 45, 67, 89) are notified to the RLC 25 from the external test control section 30 which is the upper layer.

The notification may be occurred from an audio codic or the like, as the upper layer.

The RLC 25 then notifies the MAC 24 of user data 2 (80, 05, 0D, FE, 01, 23, 45, 67, 89, 00, 00, 00, 00, 00, 00, 00, 00, 00, wherein the underlined portion is the object data before the ciphering processing).

Sequentially, the MAC 24 notifies the radio transmitting/receiving section (layer 1 processing section) 22 of user data 2 (08, 00, DB, EB, 32, 39, 89, 7B, C8, 0E, 47, 11, AF, F0 5D, 96, E0, 00, wherein the underlined portion is the object data after the ciphering processing).

Hereinafter, the same procedures as in the above description are repeated.

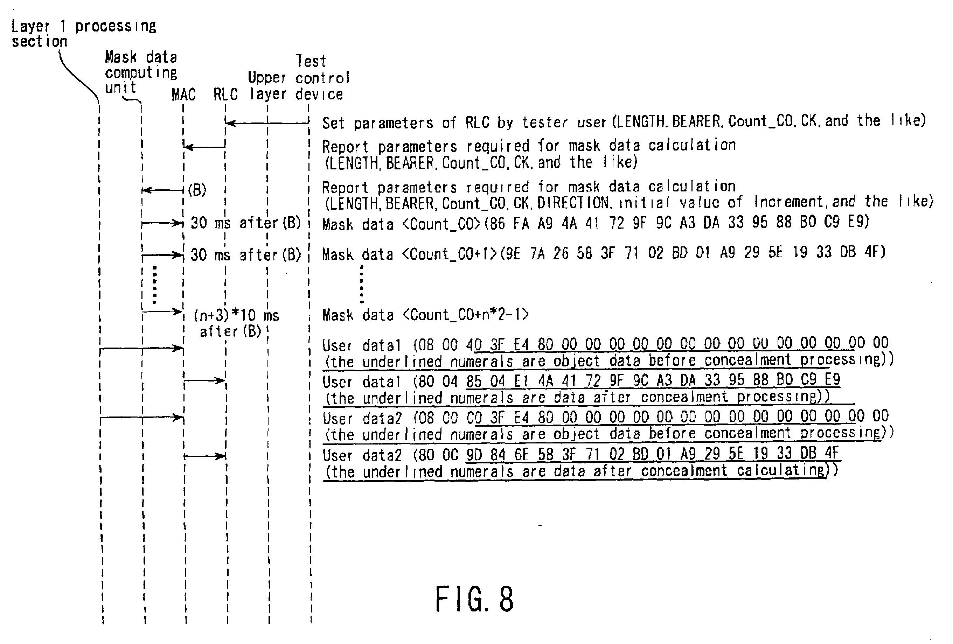

FIG. 8 is a timing chart for explanation of an example of an up link (communication in a direction from the mobile terminal to the tester) sequence in the authentication type mode (AM) as the operation of the main portion of FIG. 1.

Namely, as shown in FIG. 8, first, the tester user sets parameters (LENGTH, BEARER, COUNT_C0, CK, and the like) of the radio link control section (RLC) 25 from the external test control section 30 which is the upper layer.

Next, the RLC 25 notifies the media access control section (MAC) 24 of the parameters (LENGTH, BEARER, COUNT_C0, CK, and the like) required for computing mask data.

Then, the MAC 24 notifies the mask data computing unit 26 of the parameters (LENGTH, BEARER, Count_C0, CK, DIRECTION, Initial (value of) Increment, and the like) required for computing mask data (this timing is B) .

Here, Count_C0 expresses the initial value of COUNT_C.

In this case, DIRECTION is up and is already known.

Further, in this case, as an example, the Increment is Increment = 2.

Next, the mask data computing unit 26 notifies the MAC 24 of mask data <Count_C0> (86, FA, A9, 4A, 41, 72, 9F, 9C, A3, DA, 33, 95, 88, B0, C9, E9) after 30 ms from the above-described timing B.

Then, the mask data computing unit 26 notifies the MAC 24 of mask data <Count_C0+1> (9E, 7A, 26, 58, 3F, 71, 02, BD, 01, A9, 29, 5E, 19, 33, DB, 4F) after 30 ms from the above-described timing B.

Hereinafter, in the same way, every time when Count_C0 is incremented, predetermined mask data are notified to the MAC 24 from the mask data computing unit 26.

Further, after (n+3)*10 ms from the above-described timing B, mask data <Count_C0+n*2-1> are notified to the MAC 24 from the mask data computing unit 26.

Next, the radio transmitting/receiving section (layer 1 processing section) 22 notifies the MAC 24 of user data 1 (08, 00, 40, 3F, E4, 80, 00, 00, 00, 00, 00, 00, 00, 00, 00, 00, 00, 00, 00, 00, wherein the underlined portion is the object data before the ciphering processing).

The MAC 24 then notifies the RLC 25 of user data 1 (80, 04, 85, 04, E1, 4A, 41, 72, 9F, 9C, A3, DA, 33, 95, 88, B0, C9, E9, wherein the underlined portion is the data after the ciphering processing).

Sequentially, the radio transmitting/receiving section (layer 1 processing section) 22 notifies the MAC 24 of user data 2(08, 00, C0, 3F, E4, 80, 00, 00, 00, 00, 00, 00, 00, 00, 00, 00, 00, 00, 00, 00, wherein the underlined portion is the object data before the ciphering processing).

Next, the MAC 24 notifies the RLC 25 of user data 2 (80, 0C, 9D, 84, 6E, 58, 3F, 71, 02, BD, 01, A9, 29, 5E, 19, 33, DB, 4F, wherein the underlined portion is the data after the ciphering processing).

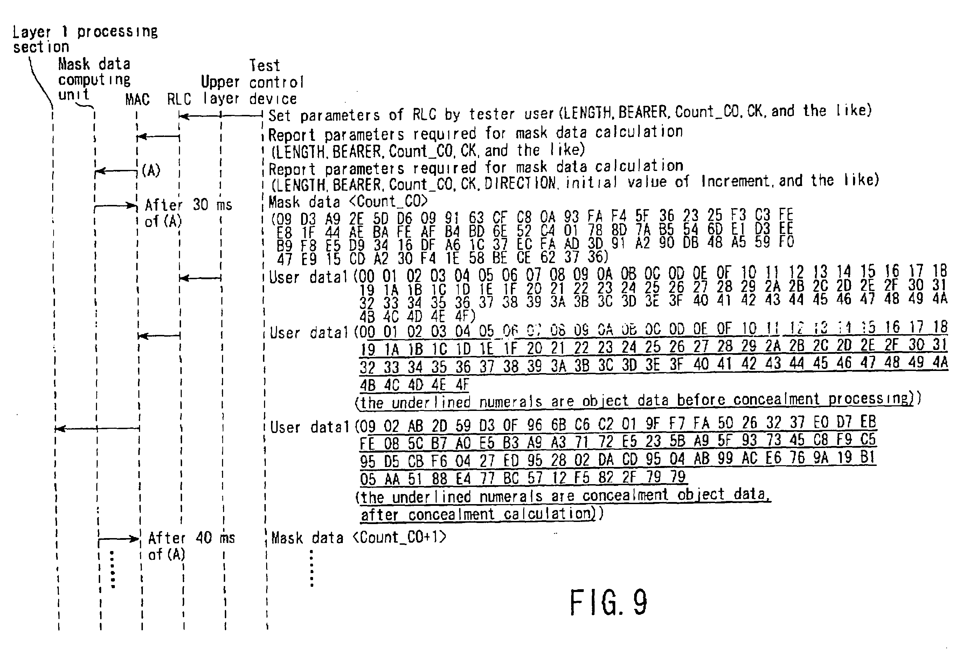

FIG. 9 is a timing chart for explanation of an example of a down sequence in the transmission type mode (TM) as the operation of the main portion of FIG. 1.

Namely, as shown in FIG. 9, first, the tester user sets parameters (LENGTH, BEARER, COUNT_C0, CK, and the like) of the radio link control section (RLC) 25 from the external test control section 30 which is the upper layer.

Next, the RLC 25 notifies the media access control section (MAC) 24 of the parameters (LENGTH, BEARER, COUNT_C0, CK, and the like) required for computing mask data.

Next, the MAC 24 notifies the mask data computing unit 26 of the parameters (LENGTH, BEARER, Count_C0, CK, DIRECTION, the initial value of the Increment, and the like) required for computing mask data (supposed that this timing is A).

Here, Count_C0 expresses an the initial value of COUNT_C.

In this case, DIRECTION is down and is already known.

Further, Increment shows how many KEYSTREAM BLOCKs are generated at one time in the BEARER.

For example, when Initial COUNT_C = a and Increment = b, the mask data computing unit (DSP) 26 generates b KEYSTREAM BLOCKS by using COUNT_C = a, a+1, ..., a+b-1 (in this example, Increment = 1).

Next, the mask data computing unit 26 notifies the MAC 24 of mask data <Count_C0> (09, D3, A9, 2E, 5D, D6, 09, 91, 63, CF, C8, 0A, 93, FA, F4, 5F, 36, 23, 25, F3, C3, FE, E8, 1F, 44, AE, BA, FE, AF, B4, BD, 6E, 52, C4, 01, 78, 8D, 7A, B5, 54, 6D, E1, D3, EE, B9, F8, E5, D9, 34, 16, DF, A6, 1C, 37, EC, FA, AD, 3D, 91, A2, 90, DB, 48, A5, 59, F0, 47, E9, 15, CD, A2, 30, F4, 1E, 5B, BE, CE, 62, 37, 36) 30 ms after the above-described timing A.

Next, the external test control section 30 which is the upper layer notifies the RLC 25 of user data 1 (00, 01, 02, 03, 04, 05, 06, 07, 08, 09, 0A, 0B, 0C, 0D, 0E, 0F, 10, 11, 12, 13, 14, 15, 16, 17, 18, 19, 1A, 1B, 1C, 1D, 1E, 1F, 20, 21, 22, 23, 24, 25, 26, 27, 28, 29, 2A, 2B, 2C, 2D, 2E, 2F, 30, 31, 32, 33, 34, 35, 36, 37, 38, 39, 3A, 3B, 3C, 3D, 3E, 3F, 40, 41, 42, 43, 44, 45, 46, 47, 48, 49, 4A, 4B, 4C, 4D, 4E, 4F).

Next, the RLC 25 notifies the MAC 24 of user data 1 (00, 01, 02, 03, 04, 05, 06, 07, 08, 09, 0A, 0B, 0C, 0D, 0E, 0F, 10, 11, 12, 13, 14, 15, 16, 17, 18, 19, 1A, 1B, 1C, 1D, 1E, 1F, 20, 21, 22, 23, 24, 25, 26, 27, 28, 29, 2A, 2B, 2C, 2D, 2E, 2F, 30, 31, 32, 33, 34, 35, 36, 37, 38, 39, 3A, 3B, 3C, 3D, 3E, 3F, 40, 41, 42, 43, 44, 45, 46, 47, 48, 49, 4A, 4B, 4C, 4D, 4E, 4F, wherein the underlined portion is the object data before the ciphering processing).

Next, the MAC 24 notifies the radio transmitting/receiving section (layer 1 processing section) 22 of user data 1 (09, D2, AB, 2D, 59, D3, 0F, 96, 6B, C6, C2, 01, 9F, F7, FA, 50, 26, 32, 37, E0, D7, EB, FE, 08, 5C, B7, A0, E5, B3, A9, A3, 71, 72, E5, 23, 5B, A9, 5F, 93, 73, 45, C8, F9, C5, 95, D5, CB, F6, 04, 27, ED, 95, 28, 02, DA, CD, 95, 04, AB, 99, AC, E6, 76, 9A, 19, B1, 05, AA, 51, 88, E4, 77, BC, 57, 12, F5, 82, 2F, 79, 79, wherein the underlined portion is the ciphering object data, after the ciphering calculation).

Next, the mask data computing unit 26 notifies the MAC 24 of mask data 1 <Count_C0+1> 40 ms after the above-described timing A.

Hereinafter, in the same way, every time when Count_C0 is incremented, predetermined mask data are notified to the MAC 24 from the mask data computing unit 26.

Next, as commands used for the operation of the main portion of FIG. 1, a command between the CPU (MAC 24) and the DSP (mask data computing unit 26) will be described.

Note that, the CPU used in this explanation supports the functions of the MAC 24 and the RLC 25 which serve as the layer 2 processing section 23, one part of the communication interface 29, and one part of the radio transmitting/receiving section 22. Therefore, because the CPU is not dedicated for the MAC 24, the CPU will be described separately from the MAC 24.

First, a list of commands of MAC_>DSP will be described.

### (a) KASUMI_REQ

This command KASUMI_REQ is a command firstly used when a test starts.

### (b) CHECK_REQ

This command CHECK_REQ is a command used when hardware are evaluated.

### (c) F8_REQ

This command F8_REQ is a command used when information of the ciphering processing parameters (initial value of COUNT_C, DIRECTION, BEARER, LENGTH, Increment, and the like) are selected.

Here, DIRECTION is automatically determined.

As described above, Increment shows how many KEYSTREAM BLOCKS are generated at one time in the BEARER.

For example, when Initial COUNT_C = a and Increment = b, the mask data computing unit (DSP) 26 generates b KEYSTREAM BLOCKS by using COUNT_C = a, a+1, ..., a+b-1.

When Increment = 0, it means that generation of KEYSTREAM BLOCKS is stopped.

Further, the value of Increment is determined by the data transmitting mode or the like in the RLC.

### (d) F8_STOP

This command F8_STOP is a command used when generation of KEYSTREAM BLOCKs is stopped.

Next, a list of commands of DSP_>MAC will be described.

### (e) KASUMI_IND

This command KASUMI_IND is a command used for verifying the aforementioned KASUMI_REQ.

### (f) CHECK_IND

This command CHECK_IND is a command used for verifying the aforementioned CHECK_REQ.

### (g) F8_IND

This command F8_IND is a command used when information of the initial COUNT_C, BEARER, Increment, and the like of KEYSTREAM BLOCKS are selected.

Next, on the basis of the commands as described above, operations of computing mask data by communications between the CPU (MAC 24, RLC 25) and the DSP (mask data computing unit 26) will be described.

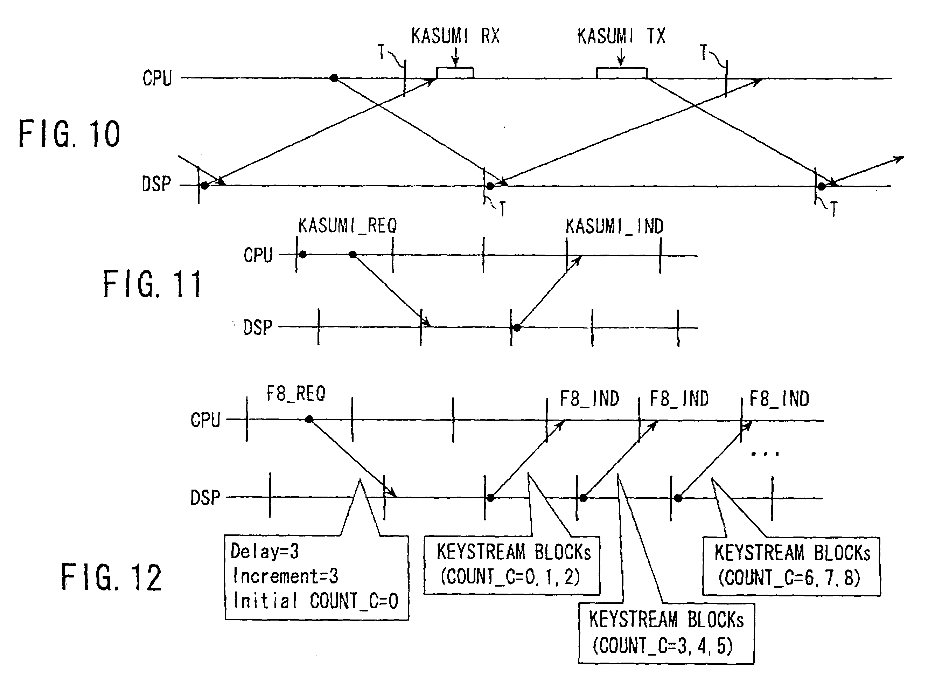

FIG. 10 is a timing chart for explanation of an example of general command transmitting/receiving timings between the CPUs (MAC 24, RLC 25) and DSP (mask data computing unit 26) as the operation of the main portion of FIG. 1.

Namely, as shown in FIG. 10, offsets (the DSP side is delayed) are attached to the CPUs and the DSP at 10 ms period of interruption timings T.

Further, in the time band of KASUMI TX (transmission), data for the DSP which the CPU (in this case, the MAC 24 function portion) prepared are integrated so as to be one command, and the command is transmitted to the DSP.

Further, in the time band of KASUMI RX (reception), command from the DSP is received, and is stored in a buffer which can be used by the CPU (in this case, the MAC 24 function portion).

If there is a command which must be sent to the CPU after generating a 10 ms period of interruption, the DSP transmits the command, and next, reads an FIFO (first-in-first-out memory) and receives the command from the CPU, and processes it.

FIG. 11 is a timing chart for explanation of an example of command transmitting/receiving timings at the time of starting a test between the CPUs (MAC 24, RLC 25) and DSP (mask data computing unit 26) as the operation of the main portion of FIG. 1.

Namely, as shown in FIG. 11, the CPU determines whether or not a program for computing mask data is loaded in the DSP in accordance with whether or not the command KASUMI_REQ is transmitted to the DSP, and the command CHECK_IND from the DSP is transmitted to the CPU.

FIG. 12 is a timing chart for explanation of an example of command transmitting/receiving timings at the time of starting ciphering processing between the CPUs (in this case, MAC 24 function portion) (MAC 24, RLC 25) and the DSP (mask data computing unit 26) as the operation of the main portion of FIG. 1.

Namely, as shown in FIG. 12, first, the CPU (in this case, the MAC 24 function portion) transmits the command F8_REQ to the DSP.

Next, the DSP continuously carries out transmission of the command F8_IND once per each 10 ms period of interruption after receiving the command F8_REQ from the CPU.

Then, there are interruptions of three times from the command F8_REQ to the first command F8_IND, and this is the reason that it is necessary to set Delay = 3, i.e., a time of 30 ms, in advance to the DSP.

In this case, in the DSP, Increment = 3, and Initial COUNT_C = 0.

Further, after receiving the command F8_REQ from the CPU, the DSP generates KEYSTREAM BLOCKs (COUNT_C = 0, 1, 2), and transmits as the first command F8_IND to the CPU.

Next, the DSP generates KEYSTREAM BLOCKS (COUNT_C = 3, 4, 5), and transmits as the second command F8_IND to the CPU.

Sequentially, the DSP generates KEYSTREAM BLOCKS (COUNT_C = 6, 7, 8), and transmits as the third command F8_IND to the CPU.

Hereinafter, the same processings are repeated.

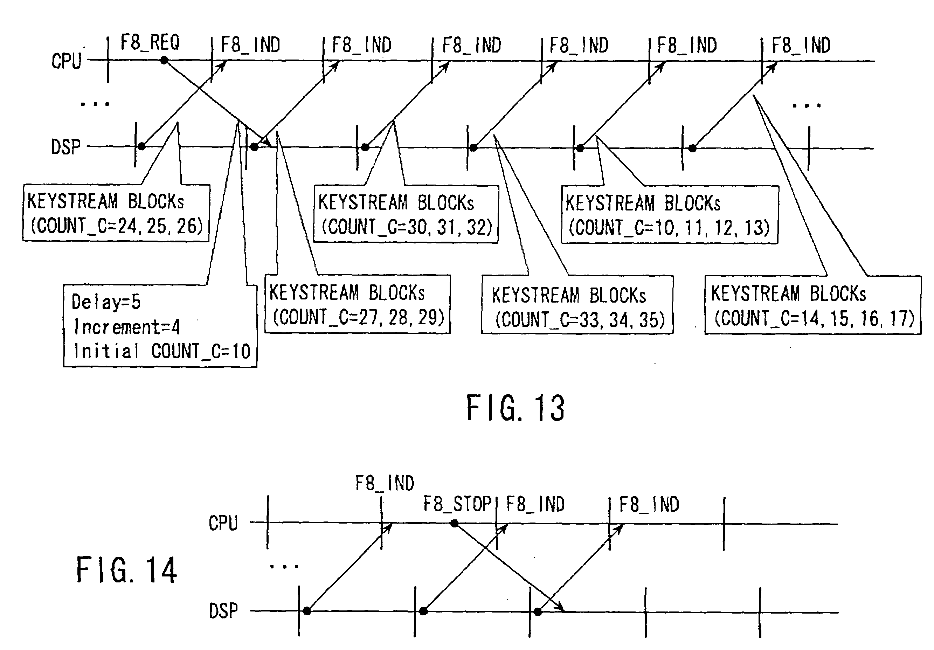

FIG. 13 is a timing chart for explanation of an example of command transmitting/receiving timings at the time of resetting ciphering processing between the CPUs (MAC 24, RLC 25) and the DSP (mask data computing unit 26) as the operation of the main portion of FIG. 1.

Namely, as shown in FIG. 13, the DSP generates KEYSTREAM BLOCKS (COUNT_C = 24, 25, 26), Delay = 5, and transmits as the K^{th} command F8_IND to the CPU.

Next, the DSP generates KEYSTREAM BLOCKs (COUNT_C = 27, 28, 29), and transmits as the k+1^{th} command F8_IND to the CPU, Increment = 4, and Initial COUNT_C = 10 are set as the resettings of the ciphering processing.

The DSP generates KEYSTREAM BLOCKS (COUNT_C = 30, 31, 32), and transmits as the k+2^{th} command F8_IND to the CPU.

The DSP generates KEYSTREAM BLOCKs (COUNT_C = 33, 34, 35), and transmits as the k+3^{th} command F8_IND to the CPU.

The DSP generates KEYSTREAM BLOCKS (COUNT_C = 10, 11, 12, 13) on the basis of Delay = 5, Increment = 4, and Initial COUNT_C = 10 which were set as the resettings of the ciphering processing, and transmits as the k+4^{th} command F8_IND to the CPU.

The DSP generates KEYSTREAM BLOCKs (COUNT_C = 14, 15, 16, 17), and transmits as the k+5^{th} command F8_IND to the CPU.

Hereinafter, the same processings are repeated.

FIG. 14 is a timing chart for explanation of an example of command transmitting/receiving timings at the time of ending the ciphering processing between the CPUs (MAC 24, RLC 25) and the DSP (mask data computing unit 26) as the operation of the main portion of FIG. 1.

Namely, as shown in FIG. 14, at the time of ending the ciphering processing, after the CPU issues command F8_STOP to the DSP, the CPU disposes of the command F8_IND, which has been already issued by the DSP, by carrying out at least two receiving processings, and thereafter, the ciphering processing is completed.

As described above, in the mobile terminal tester 20 of the present embodiment, calculation of mask data used for the ciphering processing of the layer 2 processing section 23 is carried out by the dedicated mask data computing unit 26 formed from a digital signal processor (DSP). Therefore, the burden of the CPU forming the media access control section 24 and the radio link control section 25 is extremely reduced, and testing relating to the ciphering of the mobile terminal 1 with a W-CDMA scheme can be rapidly and stably carried out.

Further, the mask data computing unit 26 is configured to calculate mask data on the basis of the parameters received from the media access control section 24, and to output the mask data to the media access control section 24.

Here, the radio link control section 25 is configured to notify the media access control section 24 of new parameters, in which its own control information is added to the parameters received from the test control section 30, when the data transferring mode with the mobile terminal 1 is the authentication type mode or the unauthentication type mode.

The media access control section 24 is configured to, when the data transferring mode with the mobile terminal 1 is the authentication type mode or the unauthentication type mode, notify the mask data computing unit 26 of the parameters received from the radio link control section 25, and carry out ciphering processing of data by the mask data calculated by the mask data computing unit 26.

In addition, the media access control section 24 is configured to, when the data transferring mode with the mobile terminal 1 is the transmission type mode, notify the mask data computing unit 26 of the parameters received from the radio link control section 25, and carry out ciphering processing of data by the mask data calculated by the mask data computing unit 26.

Therefore, the mobile terminal tester 20 of the present embodiment can calculate mask data by the single mask data computing unit 26 regardless of the transferring mode with the mobile terminal 1, and the configuration serving as the entire tester can be simplified and can be made to be low-cost.

As described above in detail, in the mobile terminal tester of the present invention, because calculation of mask data used for the ciphering processing of the layer 2 processing section is carried out by the mask data computing unit provided so as to be independent from the media access control section and the radio link control section of the layer 2 processing section, the burden of processing of computing mask data by the media access control section and the radio link control section is reduced, and the testing relating to the ciphering of a mobile terminal with a W-CDMA scheme can be rapidly and stably carried out.

In the ciphering tester for a mobile terminal with a W-CDMA scheme according to the present invention, the mask data computing unit is configured to calculate mask data on the basis of the parameters received from the media access control means, and to output the mask data to the media access control section.

Here, the radio link control section is configured to notify the media access control section of new parameters, in which its own control information is added to the parameters received from the test control section, when the data transferring mode with the mobile terminal is the authentication type mode or the unauthentication type mode.

Moreover, the media access control section is configured to, when the data transferring mode with the mobile terminal is the authentication type mode or the unauthentication type mode, notify the mask data computing unit of the parameters received from the radio link control section, and carry out ciphering processing of data by the mask data calculated by the mask data computing unit.

Further, the media access control section is configured to, when the data transferring mode with the mobile terminal is the transmission type mode, notify the mask data computing unit of the parameters received from the radio link control section, and carry out ciphering processing of data by the mask data calculated by the mask data computing unit.

Therefore, the ciphering tester for a mobile terminal with a W-CDMA scheme according to the present embodiment can calculate mask data by the single mask data computing unit regardless of the transferring mode with the mobile terminal, and the entire configuration of the tester can be simplified.

In addition, in the ciphering tester for a mobile terminal with a W-CDMA scheme according to the present embodiment, the media access control section and the radio link control section are configured from a microcomputer (processor) including CPUs, and the mask data computing unit is configured from a digital signal processor (DSP) which is independent from the CPU and parallel-operates with the processings of the CPU. Therefore, testing relating to the ciphering of a mobile terminal with a W-CDMA scheme can be carried out even more rapidly.

Note that the ciphering tester for a mobile terminal with a W-CDMA scheme according to the present embodiment is not limited to the embodiment which was described and illustrated, and various changes within a range which does not deviate from the gist of the present invention can be realized.

For example, the mask data computing unit 26 is not limited to the case of being configured from a single digital signal processor (DSP), and may be configured to have a first mask data computing section calculating mask data used for the aforementioned first ciphering processing on the basis of the parameters for the first ciphering processing, and a second mask data computing section calculating mask data used for the aforementioned second ciphering processing on the basis of the parameters for the second ciphering processing.

The mask data computing unit 26 is not limited to the case of being configured from a digital signal processor (DSP) and may be configured from a device having another same function, if the mask data computing unit 26 can be provided so as to be independent from the aforementioned media access control section 24 and the aforementioned radio link control section 25.

Further, if the mask data computing unit 26 can be provided so as to be independent from the aforementioned media access control section (24) and the aforementioned radio link control section (25), the mask data computing unit 26 is not limited to the case of being configured in the layer 2 processing section, and may be provided at an arbitrary portion.

Accordingly, as described above in detail, according to the present invention, a ciphering tester for a mobile terminal a with W-CDMA scheme, which uses a technique for smoothly carrying out testing relating to the ciphering of a mobile terminal with a W-CDMA scheme, can be provided.

## Claims

1. A ciphering tester for a mobile terminal with a W-CDMA scheme carrying out a test relating to ciphering of a mobile terminal (1) with a W-CDMA scheme by carrying out transmitting and receiving of data and control information with a test control section (30) presenting control information including parameters for ciphering processing corresponding to a data transferring mode with the mobile terminal (1) with a W-CDMA scheme, comprising:
a layer 1 processing section (22) to carry out transmitting and receiving of radio signals with the mobile terminal (1) with a W-CDMA scheme;
a layer 2 processing section (23) which enables transmitting/receiving of data by forming a link with the mobile terminal (1) with a W-CDMA scheme, and which, in order to carry out the ciphering processing on the data, has a media access control section (24) which carries out transmitting and receiving of data with the layer 1 processing section, and radio link controlling means (25) which carries out transmitting and receiving of data with the media access control section (24) and the test control section (30); and
a mask data calculating section calculating mask data for use in the ciphering processing carried out at the layer 2 processing section (23) on the basis of parameters for ciphering processing presented by the test control section (30),
**characterized in that**
the media access control section (24) is configured to receive control information including parameters for the ciphering processing presented by the test control section (30) via the radio link control section (25), and to notify the mask data calculating section of the parameters for the ciphering processing,
the mask data calculating section is provided to be independent from the media access control section (24) and the radio link control section (25) of the layer 2 processing section (23), and is configured to have at least one mask data computing unit (26) which calculates mask data for use in the ciphering processing carried out at the layer 2 processing section (23) on the basis of the parameters for the ciphering processing reported from the media access control section (24), and
the media access control section (24) is configured to carry out ciphering processing on the data in accordance with a data transferring mode with the mobile terminal (1) with a W-CDMA scheme by using the mask data calculated by the mask data computing unit (26).

2. A ciphering tester for a mobile terminal with a W-CDMA scheme according to claim 1, **characterized in that** the mask data computing unit (26) calculates mask data for use in a predetermined ciphering processing applied in a case in which the data transferring mode with the mobile terminal (1) with a W-CDMA scheme is a transmission type mode on the basis of the parameters for the ciphering processing reported from the media access control section (24), and has one or more mask data computing sections which calculate mask data for use in a predetermined ciphering processing applied in a case in which the data transferring mode with the mobile terminal (1) with a W-CDMA scheme is an authentication type mode or an unauthentication type mode.

3. A ciphering tester for a mobile terminal a with W-CDMA scheme according to claim 1 or 2, **characterized in that** the mask data computing unit (26) is provided to be independent from the media access control section (24) and the radio link control section (25) in the layer 2 processing section.

4. A ciphering tester for a mobile terminal with a W-CDMA scheme according to any one of claims 1 to 3, **characterized in that** the mask data computing unit (26) is configured to calculate mask data for use in the ciphering processing on the basis of the parameters for the ciphering processing reported from the media access control section (24), and to output the mask data to the media access control section (24).

5. A ciphering tester for a mobile terminal with a W-CDMA scheme according to any one of claims 1 to 4, **characterized in that** the radio link control section (25) is configured to notify the media access control section (24) of parameters for new ciphering processing, in which its own control information is added to the parameters for the ciphering processing presented by the test control section (30), when the data transferring mode with the mobile terminal (1) with a W-CDMA scheme is an authentication type mode or an unauthentication type mode.

6. A ciphering tester for a mobile terminal with a W-CDMA scheme according to any one of claims 1 to 5, **characterized in that** the media access control section (24) is configured to, when the data transferring mode with the mobile terminal (1) with a W-CDMA scheme is an transmission type mode, notify the mask data computing unit (26) of the parameters for the ciphering processing presented by the test control section (30) via the radio link control section (25), and carry out the ciphering processing on the data by using the mask data calculated by the mask data computing unit (26).

7. A ciphering tester for a mobile terminal with a W-CDMA scheme according to claim 5, **characterized in that** the media access control section (24) is configured to, when the data transferring mode with the mobile terminal (1) with a W-CDMA scheme is an authentication type mode or an unauthentication type mode, notify the mask data computing unit (26) of the parameters for the new ciphering processing received from the radio link control section (25), and carry out the ciphering processing on the data by using the mask data calculated by the mask data computing unit (26).

8. A ciphering tester for a mobile terminal with a W-CDMA scheme according to any one of claims 1 to 7, **characterized in that** the media access control section (24) and the radio link control section (25) are integrally configured from a microprocessor including a central processing unit (CPU).

9. A ciphering tester for a mobile terminal with a W-CDMA scheme according to claim 8, **characterized in that** the mask data computing unit (26) is configured form a digital signal processor which is independent from the CPU and which parallel-operates with the CPU.

10. A ciphering tester for a mobile terminal with a W-CDMA scheme according to any one of claims 1 to 9, **characterized in that**, when the test control section (30) is configured from a computer including an external personal computer (PC), the test control section (30) is configured such that a program controlling execution of a test relating to ciphering of the mobile terminal (1) with a W-CDMA scheme is installed in the PC via a recording medium or a communication medium.
